Europäisches Patentamt

European Patent Office

Office européen des brevets

(19)

(11) **EP 0 762 152 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.⁷: **G02B 1/10**, C03C 17/36

(21) Anmeldenummer: **96810559.3**

(22) Anmeldetag: **23.08.1996**

(54) **Aluminium-Reflektor mit reflexionserhöhendem Schichtverbund**

Aluminium reflector having a reflection increasing coating

Réflecteur d'aluminium à revêtement pour augmenter la réflexion

(84) Benannte Vertragsstaaten:
**AT BE CH DE ES FR GB IT LI NL SE**

(30) Priorität: **12.09.1995 CH 257495**

(43) Veröffentlichungstag der Anmeldung:
**12.03.1997 Patentblatt 1997/11**

(73) Patentinhaber: **Alcan Technology & Management AG**
**8212 Neuhausen am Rheinfall (CH)**

(72) Erfinder: **Gillich, Volkmar**
**8212 Neuhausen am Rheinfall (CH)**

(56) Entgegenhaltungen:
**EP-A- 0 280 299     EP-A- 0 714 039**

- **OPTICAL ENGINEERING, Bd. 32, Nr. 3, März 1993, BELLINGHAM US, Seiten 547-552, XP000356209 K.H. GUENTHER ET AL: "Corrosion-resistant front surface aluminum mirror coatings"**
- **PATENT ABSTRACTS OF JAPAN vol. 4, no. 103 (P-020), 23.Juli 1980 & JP-A-55 062411 (CANON INC.), 10.Mai 1980,**
- **PATENT ABSTRACTS OF JAPAN vol. 7, no. 142 (P-205) [1287] , 22.Juni 1983 & JP-A-58 055901 (RICOH K.K.), 2.April 1983,**
- **"Anodically produced multiple oxide films for increasing the reflectance of evaporated aluminum", G. Haas und A.P.Bradford, JOSA, Vol.44, S.810-815, Oktober 1954**
- **"On the preparation of hard oxide films with precisely controlled thickness on evaporated aluminum mirrors", G. Haas, JOSA, Vol.39, S.532-540, Juli 1949**
- **"Aluminum II. Non Porous Films", Chapter 17 in "Anodic Oxide Films", L.Young, Academic Press, New York, 1961**

**Beschreibung**

Vorliegende Erfindung betrifft ein Verfahren zur Herstellung eines Reflektors nach dem Oberbegriff von Anspruch 1.

Reflektoren, die ein auf Aluminium abgeschiedenes Schichtsystem, enthaltend LI/HI-Schichten (LI/HI = **L**ow Refraction **I**ndex / **H**igh Refraction **I**ndex), d.h. Schichten, die aus einer inneren Schicht mit Brechungsindex $n_1$ (LI) und einer äusseren Schicht mit einem gegenüber $n_1$ höheren Brechungsindex $n_2$ (HI) aufweisen, sind an sich als Reflektoren mit reflexionserhöhenden Oberflächenschichten bekannt.

Die Herstellung solcher Reflektoren geschieht üblicherweise durch Aufbringen hochreiner, sehr dünner Al-Schichten auf einen Reflektorkörper aus beispielsweise Glas oder technischem Aluminium (d.h. Aluminium niedriger Reinheit) durch Anwendung beispielsweise von PVD- (physical vapour deposition) Methoden wie Sputtern oder Aufdampfen. Die hochreine Al-Schicht wird dann mittels einer LI-Schutzschicht aus beispielsweise $Al_2O_3$ oder $SiO_2$, welche üblicherweise durch PVD- oder CVD- (chemical vapour deposition) Methoden aufgebracht werden, geschützt und mit einer weiteren HI-Schicht zu einer reflexionserhöhenden LI/HI-Reflektoroberfläche vervollständigt.

Der geringen Schichtdicke wegen, können PVD-Al-Schichten im allgemeinen nicht anodisiert werden, so dass das Abscheiden der LI- und HI-Schichten durch PVD- oder CVD-Methoden in Hochvakuum erfolgt. Das Erreichen hoher Reflexionseigenschaften von reflexionserhöhenden Schichtverbunden bedingt eine gute Homogenität sowie die genaue Einhaltung enger, genau vordefinierter Schichtdicken-Toleranzen der einzelnen Schichten. Die Einhaltung genauer Schichtdicken-Toleranzen von in Hochvakuum mittels PVD- oder CVD-Methoden deponierten Oxidschichten sowie deren Kontrolle ist jedoch schwierig zu bewerkstelligen und bedingt aufwendige und teure Vorrichtungen. Die Depositionsrate von CVD- oder PVD-Schichten, insbesondere von derartigen dielektrischen Schichten, ist verfahrensbedingt -- im Vergleich zu chemischen Verfahren -- relativ niedrig, was hinsichtlich der hohen Anlagekosten von Hochvakuum-Depositionsanlagen zu hohen Herstellungskosten führt. Zudem wird durch die kleinen Depositionsraten und der Notwendigkeit von Hochvakuumanlagen für PVD- oder CVD-Prozesse die Anwendung einer kontinuierlichen Fertigung erschwert oder gar verunmöglicht.

Eine weitere Möglichkeit zur Herstellung reflexionserhöhender Schichtverbunde ist die chemische oder anodische Oxidation von Aluminiumoberflächen und nachfolgende Abscheidung einer dielektrischen Schicht mit gegenüber Aluminiumoxid höherem Brechungsindex. Dazu werden Reflektoren aus Aluminium oder Reflektoren mit einer für die anodische Oxidation genügend dicken Aluminiumschicht benötigt. Die anodische Oxidation geschieht dabei üblicherweise mit Gleichstrom in einem Schwefelsäureelektrolyten. Bei Wahl entsprechender Anodisierparameter, kann die resultierende Schutzschicht zwar eine homogene Schicht mit vordefinierter Schichtdicke darstellen, zeigt aber üblicherweise eine durch das Verfahren bedingte hohe Porosität.

Die anodische Oxidation in Schwefelsäureelektrolyten wird gewöhnlich als GS-Verfahren bezeichnet (**G**leichstrom-**S**chwefelsäureverfahren). Dabei werden -- zur Erreichung genügender Reflexionseigenschaften -- die als Reflektoroberflächen vorgesehenen Aluminiumoberflächen zweckmässigerweise chemisch oder elektrolytisch geglänzt und anschliessend mittels beispielsweise dem GS-Verfahren mit einer transparenten Schutzschicht geschützt. Typischerweise liegen beim GS-Verfahren die Schwefelsäurekonzentration bei 20 Gew.-%, die Elektrolyttemperaturen bei 15 bis 30 °C, die angelegte Gleichspannung bei 12 bis 30 V, wobei die Stromdichte bis 1 bis 3 $A/dm^2$ beträgt. Die dabei erzielten Schichtdicken messen typischerweise 1 bis 10 μm. Die erhaltenen Schichten sind farblos bis gelblich.

Eine durch ein GS-Verfahren hergestellte Oxidschicht besteht generell aus zwei Schichten: einer porenfreien, sehr dünnen Grund- oder Sperrschicht und einer porösen Deckschicht. Die Poren entstehen durch die teilweise chemische Rücklösung der Oxidschicht an der dem Elektrolyten ausgesetzten Oberfläche. Die Gesamtdicke der Oxidhaut erreicht ihre Obergrenze, wenn sich Wachstum und Rücklösung die Waage halten, was von der Elektrolytzusammensetzung, der Stromdichte und der Elektrolyttemperatur abhängt.

Die in Schwefelsäure erzeugten anodischen Oxidschichten sind nur auf Reinstaluminium und AlMg oder AlMgSi-Legierungen auf Basis von Reinstaluminium (Al $\geq$ 99.85 Gew.-%) farblos und glasklar. Auf den meisten Konstruktionslegierungen entstehen als Folge der im Gefüge vorhandenen heterogenen Ausscheidungen mehr oder weniger getrübte Schichten. Zudem findet bei den meisten Legierungen bei ungünstiger Wärmebehandlung eine Entmischung im Gefüge statt, was zu grauen Verfärbungen, wie beispielsweise Wärmestauflecken, führt.

Bei den mittels dem GS-Verfahren hergestellten porösen Oberflächenschutzschichten auf Aluminiumoberflächen können insbesondere bei weniger reinen Werkstoffen, wie beispielsweise Al 99.85, Al 99.8 oder Al 99.5, Legierungsbestandteile, wie beispielsweise Fe-und/oder Si-reiche intermetallische Phasen, in die Oxidschicht miteingebaut werden, welche dann zu ungewollter Lichtabsorption und/oder zu Lichtstreuung führen, d.h. das Licht wird in zahlreiche Raumwinkel reflektiert. Folglich werden die nach dem elektrolytischen Glänzen vorhandenen lichttechnischen Werte, wie beispielsweise die Gesamtreflexion oder die gerichtete Reflexion, durch die GS-Anodisation nachteilig beeinflusst.

Durch die verfahrensbedingte hohe Schichtdicke von mit dem GS-Verfahren hergestellten anodischen Oxidschichten sinkt der Reflexionsgrad der Oberfläche durch Absorption und Lichtstreuung. Zudem sind mit dem GS-Verfahren hergestellte Oxidschichten für die Verwendung in reflexionserhöhenden Schichtverbunden für sichtbares Licht nicht sinnvoll, da die Reflexionseigenschaften solcher Schichtverbunde in Abhängigkeit von der Lichtwellenlänge, bedingt durch deren hohe Schichtdicke, zu viele und zu nahe aufeinanderfolgende Maxima und Minima aufweisen. Schliesslich weist die anodische Oxidschicht im üblichen Schichtdickenbereich von 1 bis 3 μm oft störende Interferenzeffekte, die sogenannte Irisierung, auf.

Ein Reflektor der eingangs genannten Art ist aus der EP-A-0714039 bekannt. Das zur Bildung der HI-Schicht eingesetzte Deckschichtmaterial wird in oxidierter Form abgeschieden.

Auch bei dem im Artikel "Anodically produced multiple oxide films for increasing the reflectance of evaporated aluminum", G. Haas und A.P. Bradford, JOSA, Vol. 44, S. 810 - 815; Oktober 1954, offenbarten Verfahren wird das als HI-Schicht verwendete $TiO_2$ durch direktes Verdampfen auf dem Substrat abgeschieden.

Aufgabe vorliegender Erfindung ist die Bereitstellung eines Verfahrens zur Herstellung von kostengünstigen Reflektoren mit reflexionserhöhenden Schichtverbunden, insbesondere für lichttechnische Zwecke, welche die oben dargelegten Nachteile der aus dem Stand der Technik bekannten Reflektoren vermeiden.

Erfindungsgemäss wird dies durch ein Verfahren mit den Merkmalen von Anspruch 1 erreicht.

Dabei ist zu berücksichtigen, dass der Brechungsindex $n$, d.h. $n_1$ oder $n_2$, -- wegen der Dispersion -- von der Wellenlänge abhängig ist, d.h. in vorliegendem Text beziehen sich $n_1$ und $n_2$ immer auf die entsprechende Wellenlänge des auf die Reflektoroberfläche eingestrahlten Lichtes. Zudem ist zu berücksichtigen, dass die Bedingung $d_i \cdot n_i = l_i \cdot \lambda/4$, i = 1,2 für den Erhalt eines reflexionserhöhenden Schichtverbundes exakt nur für senkrecht auf die Reflektoroberfläche einfallende elektromagnetische Strahlung gilt.

Die LI/HI-Mehrfachschichten sind aus mindestens zwei Schichten mit verschiedenen Brechungsindizes aufgebaut. Die Kombination zweier auf einer Metalloberfläche befindlichen dielektrischer Schichten mit verschiedenem Brechungsindex, bei der die Schicht mit dem tieferen Brechungsindex auf die Metalloberfläche zu liegen kommt, erlaubt gegenüber einer einzelnen homogenen Schicht eine Verbesserung der Reflexionseigenschaften. Bei gegebener Schichtzusammensetzung kann die höchste Reflexion dann erreicht werden, wenn die optischen Schichtdicken der einzelnen Schichten λ/4 oder ein ungerades Vielfaches davon betragen. Bezüglich der Zusammensetzung der Schichtmaterialien werden die besten Reflexionseigenschaften dann erreicht, wenn der Unterschied der Brechungsindizes der einzelnen Schichten möglichst gross wird.

Die für die Reflektoren jeweils benötigte, gegen den Reflektorkörper gerichtete Aluminiumschicht kann Teil eines Stückgutes, beispielsweise eines Profiles, Balkens oder eine andere Form von Stücken, einer Platte, eines Bandes, Bleches oder einer Folie aus Aluminium sein, oder eine Aluminium-Deckschicht eines Verbundwerkstoffes, insbesondere als Aluminiumdeckschicht einer Verbundplatte darstellen, oder eine auf einen beliebigen Werkstoff -- beispielsweise elektrolytisch -- abgeschiedene Aluminiumschicht betreffen. In einer bevorzugten Ausführungsform betrifft der die Aluminiumschicht enthaltende Gegenstand, d.h. der Reflektorkörper und die Aluminiumschicht des Schichtverbundes, ein Werkstück aus Aluminium, welches z.B. durch ein Walz-, Extrusions-, Schmiede- oder Fliesspressverfahren hergestellt wurde. Der die Aluminiumschicht enthaltende Gegenstand kann auch durch Biegen, Tiefziehen, Kaltfliesspressen oder dergleichen umgeformt sein.

Mit dem Werkstoff Aluminium sind in vorliegendem Text Aluminium aller Reinheitsgrade, sowie alle handelsüblichen Aluminiumlegierungen umfasst. Beispielsweise umfasst der Begriff Aluminium alle Walz-, Knet-, Guss-, Schmiede- und Presslegierungen aus Aluminium. Zweckmässigerweise besteht die Aluminiumschicht aus Reinaluminium mit einem Reinheitsgrad von gleich oder grösser 98.3 Gew.-% oder Aluminiumlegierungen aus diesem Aluminium mit wenigstens einem der Elemente aus der Reihe von Si, Mg, Mn, Cu, Zn oder Fe. Die Aluminiumschicht aus Reinaluminium weist beispielsweise eine Reinheit von 98.3 Gew.-% und höher, zweckmässig 99.0 Gew.-% und höher, bevorzugt 99.9 Gew.-% und höher und insbesondere 99.95 Gew.-% und höher auf.

Neben Aluminium genannter Reinheiten kann die Aluminiumschicht auch aus einer Aluminiumlegierung bestehen, enthaltend 0.25 Gew.-% bis 5 Gew.-%, insbesondere 0.5 bis 2 Gew.-%, Magnesium oder enthaltend 0.2 bis 2 Gew.-% Mangan oder enthaltend 0.5 bis 5 Gew.-% Magnesium und 0.2 bis 2 Gew.-% Mangan, insbesondere z.B. 1 Gew.-% Magnesium und 0.5 Gew.-% Mangan oder enthaltend 0.1 bis 12 Gew.-%, vorzugsweise 0.1 bis 5 Gew.-%, Kupfer oder enthaltend 0.5 bis 5 Gew.-% Zink und 0.5 bis 5 Gew.-% Magnesium oder enthaltend 0.5 bis 5 Gew.-% Zink, 0.5 bis 5 Gew.-% Magnesium und 0.5 bis 5 Gew.-% Kupfer oder enthaltend 0.5 bis 5 Gew.-% Eisen und 0.2 bis 2 Gew.-% Mangan, insbesondere z.B. 1.5 Gew.-% Eisen und 0.4 Gew.-% Mangan.

Die Aluminiumoberflächen können beliebige Gestalt aufweisen und können gegebenenfalls auch strukturiert sein. Bei gewalzten Aluminiumoberflächen können diese beispielsweise mittels Hochglanz- oder Designerwalzen behandelt sein. Eine bevorzugte Verwendung strukturierter Aluminiumoberflächen findet sich beispielsweise für Reflektoren in der Tageslichtbeleuchtung, wobei insbesondere strukturierte Oberflächen mit Strukturgrössen von 0.1 bis 1 mm zur Anwendung gelangen.

Damit die Absorption der die LI/HI-Schichten durchdringenden elektromagnetischen Strahlung im Schichtverbund, sowie eine durch das Vorhandensein von Poren möglicherweise auftretende und schlecht kontrollierbare diffuse Streuung möglichst gering ausfallen, müssen die LI/HI-Schichten porenfrei und für die zu reflektierenden elektromagnetischen Wellen transparent sein. Dabei wird unter dem Begriff porenfrei nicht eine absolute Porenfreiheit verstanden. Vielmehr sind die LI/HI-Schichten des erfindungsgemässen Reflektors im wesentlichen porenfrei. Wichtig dabei ist, dass insbesondere die anodisch erzeugte LI-Schicht im wesentlichen keine verfahrensbedingte Porosität aufweist. Unter einer verfahrensbedingten Porosität wird beispielsweise die Verwendung eines Aluminiumoxid-auflösenden Elektrolyten verstanden. In vorliegender Erfindung weist die porenfreie LI-Schicht eine Porosität von weniger als 1 % auf.

Die Dielektrizitätskonstante $\varepsilon_1$ der LI-Schicht hängt u.a. von den zu ihrer Herstellung verwendeten Verfahrensparametern während der anodischen Oxidation ab. Die Dielektrizitätskonstante $\varepsilon_1$ der LI-Schicht von erfindungsgemässen Reflektoren beträgt bei einer Temperatur von 20 °C zwischen 6 und 10.5 und bevorzugt zwischen 8 bis 10.

Bezüglich der LI/HI-Schichtdicken wurde gefunden, dass die Reflexionseigenschaften im wesentlichen periodisch verlaufen, wobei mit zunehmenden Schichtdicken, insbesondere bei Schichten mit optischen Schichtdicken $d_{opt,i}$ grösser als $6 \cdot \lambda/4$, die Reflexionseigenschaften für lichttechnische Zwecke ungenügend sind. Bevorzugt werden daher Schichtdicken, die eine optische Schichtdicke aufweisen, die kleiner als $6 \cdot \lambda/4$ ist und insbesondere solche mit $l_1$ und $l_2$ gleich 1 oder 3.

Es wurde gefunden, dass Reflektoren mit LI/HI-Schichtdicken im Schichtdickenbereich von $d_i \cdot n_i = l_i \cdot \lambda/4 \pm 10$ nm ($i = 1, 2$) liegen, im wesentlichen dieselben guten Reflexionseigenschaften zeigen, so dass die Schichtdicken $d_i$ nicht exakt die Bedingung $d_i \cdot n_i = l_i \cdot \lambda/4$, i = 1,2 erfüllen müssen.

Bevorzugt finden die Reflektoren für Wellenlängen $\lambda = 550$ nm $\pm 200$ nm Anwendung und besonders bevorzugt für Wellenlängen, die der mittleren, für das menschliche Auge bei Tageslicht am besten wahrnehmbare Wellenlänge des sichtbaren Lichtes entspricht, welche bei ca. 550 nm liegt.

Bevorzugt betragen die Schichtdicke $d_1$ der LI-Schicht und die Schichtdicke $d_2$ der HI-Schicht je zwischen 30 und 190 nm, wobei die an einem bestimmten Ort gemessenen Schichtdicken $d_1$ und $d_2$ gegenüber den über den ganzen Schichtverbund gemittelten Schichtdicken $\bar{d}_1$ und $\bar{d}_2$ um nicht mehr als $\pm 5$ % variieren. Dies erlaubt den Einsatz der Reflektoren für die möglichst verlustfreie Reflexion elektromagnetischer Wellen in der Lichttechnik, da erst die reproduzierbaren, homogenen Schichtdicken der LI/HI-Schichten die Herstellung reflexionserhöhender Reflektor-Oberflächen hoher Güte ermöglichen.

Die als LI-Schicht wirkende Aluminiumoxid-Sperrschicht weist zweckmässigerweise einen Brechungsindex $n_1$ zwischen 1.55 und 1.65 auf.

Als HI-Schichtmaterialien eignen sich beispielsweise alle bekannten optischen Schichtmittel. Zweckmässigerweise besteht oder enthält die HI-Schicht Oxide von Alkali-, z.B. Li, Erdalkali-, z.B. Mg, Ca, Sr, Ba, und/oder Übergangsmetallen, wie z.B. Sc, Ti, V, Cr, Mn, Fe, Co, Ni, Y, Zr, Nb, Mo, Te, Ru, Rh, Pd, Hf, Ta, W, Re, Os, Ir, Pt und/oder Lanthanoiden wie z. B. La, Ce, Pr, Nd, Pm, Dy, Yb oder Lu, usw. Bevorzugt finden für die erfindungsgemässen Reflektoren HI-Schichten aus Titanoxid (Ti-Oxid) mit einem Brechungsindex von ca. 2.5, Praseodym-Titanoxid (PrTi-Oxid), Lanthan-Titanoxid (LaTi-Oxid), Tantaloxid (Ta-Oxid), Hafniumoxid (Hf-Oxid), Niobiumoxid (Nb-Oxid), Zn-Oxid, Ce-Oxid oder einem Oxid einer Legierung der genannten Soffe Anwendung. Besonders bevorzugt werden jedoch HI-Schichten aus $TiO_2$, Ta-Oxid, PrTi-Oxid oder LaTi-Oxid.

Die mit dem erfindungsgemässen Verfahren hergestellten Reflektoren finden bevorzugt Verwendung für lichttechnische Zwecke oder als Reflektoren für Infrarot-Strahlung. Eine besonders bevorzugte Verwendung finden die erfindungsgemässen Reflektoren für Leuchten in der Lichttechnik und insbesondere in der Tageslichttechnik, insbesondere als funktionelle Leuchten wie Bildschirmarbeitsplatz-Leuchten, Sekundärleuchten, Rasterleuchten oder Lichtleitelemente wie Lichtleitdecken oder Lichtumlenklamellen.

Das erfindungsgemässe Verfahren erlaubt die Herstellung von reflexionserhöhenden Schichtverbunden auf Aluminiumschichten, wobei die HI- und LI-Schichten dünn, mit einer genau vorgegebenen Schichtdicke versehen, porenfrei, homogen und bezüglich der elektromagnetischen Strahlung, insbesondere im sichtbaren und/oder infraroten Bereich, transparent sind.

Für das erfindungsgemässe Verfahren eignen sich Aluminiumschichten, die Teil eines Stückgutes, beispielsweise eines Profiles, Balkens oder eine andere Form von Stücken, einer Platte, eines Bandes, Bleches oder einer Folie aus Aluminium sind, oder die eine Aluminium-Deckschicht eines Verbundwerkstoffes, insbesondere eine Aluminiumdeckschicht einer Verbundplatte darstellen, oder die eine auf einen beliebigen Werkstoff -- beispielsweise elektrolytisch -- abgeschiedene Aluminiumschicht betreffen. In einer bevorzugten Ausführungsform wird die für das erfindungsgemässe Verfahren benötigte Aluminiumschicht durch die Oberflächenschicht eines Gegenstandes aus Aluminium gebildet, wobei der Gegenstand z.B. durch ein Walz-, Extrusions-, Schmiede- oder Fliesspressverfahren hergestellt sein kann.

Für vorliegendes Verfahren eignen sich alle handelsüblichen Aluminiumlegierungen, sowie Aluminium aller Reinheitsgrade. Beispielsweise umfasst der Begriff Aluminium alle Walz-, Knet-, Guss-, Schmiede- und Presslegierungen aus Aluminium. Zweckmässigerweise besteht die Aluminiumschicht aus Reinaluminium mit einem Reinheitsgrad von gleich oder grösser 98.3 Gew.-% oder Aluminiumlegierungen aus diesem Aluminium mit wenigstens einem der Elemente aus der Reihe von Si, Mg, Mn, Cu, Zn oder Fe. Die Aluminiumschicht aus Reinaluminium weist beispielsweise eine Reinheit von 98.3 Gew.-% und höher, zweckmässig 99.0 Gew.-% und höher, bevorzugt 99.9 Gew.-% und höher und insbesondere 99.95 Gew.-% und höher auf.

Neben Aluminium genannter Reinheiten kann die Aluminiumschicht auch aus einer Aluminiumlegierung bestehen, enthaltend 0.25 Gew.-% bis 5 Gew.-%, insbesondere 0.5 bis 2 Gew.-%, Magnesium oder enthaltend 0.2 bis 2 Gew.-% Mangan oder enthaltend 0.5 bis 5 Gew.-% Magnesium und 0.2 bis 2 Gew.-% Mangan, insbesondere z.B. 1 Gew.-% Magnesium und 0.5 Gew.-% Mangan oder enthaltend 0.1 bis 12 Gew.-%, vorzugsweise 0.1 bis 5 Gew.-%, Kupfer oder enthaltend 0.5 bis 5 Gew.-% Zink und 0.5 bis 5 Gew.-% Magnesium oder enthaltend 0.5 bis 5 Gew.-% Zink, 0.5 bis 5 Gew.-% Magnesium und 0.5 bis 5 Gew.-% Kupfer oder enthaltend 0.5 bis 5 Gew.-% Eisen und 0.2 bis 2 Gew.-% Mangan, insbesondere z.B. 1.5 Gew.-% Eisen und 0.4 Gew.-% Mangan.

Die Aluminiumschicht kann vorgängig zum erfindungsgemässen Verfahren auch einem Biege-, Tiefzieh-, Kaltfliesspress- oder einem ähnlichen Prozess unterworfen werden und/oder kann auch strukturiert sein.

Die Herstellung von Reflektoren bedingt eine saubere Aluminiumoberfläche, d.h. die anodisch zu oxidierende Aluminiumoberfläche muss üblicherweise vorgängig zum erfindungsgemässen Verfahren einer Oberflächenbehandlung, der sogenannten Vorbehandlung, zugeführt werden.

Die Aluminiumoberflächen weisen meist eine natürlich entstehende Oxidschicht auf, die häufig aufgrund ihrer Vorgeschichte durch Fremdsubstanzen verunreinigt ist. Solche Fremdsubstanzen können beispielsweise Reste von Walzhilfsmitteln, Transportschutzölen, Korrosionsprodukte oder eingepresste Fremdpartikel und ähnlichem sein. Zum Zwecke der Entfernung solcher Fremdsubstanzen werden die Aluminiumoberflächen üblicherweise mit Reinigungsmitteln, die einen gewissen Beizangriff ausüben, chemisch vorbehandelt. Dazu eignen sich -- neben sauren wässrigen Entfettungsmitteln -- insbesondere alkalische Entfettungsmittel auf Basis Polyphosphat und Borat. Eine Reinigung mit mässigem bis starkem Materialabtrag bildet das Beizen oder Aetzen mittels stark alkalischen oder sauren Beizlösungen, wie z.B. Natronlauge oder ein Gemisch aus Salpetersäure und Flusssäure. Dabei werden die natürliche Oxidschicht und damit auch alle darin eingebauten Verunreinigungen entfernt. Bei Verwendung von stark angreifenden alkalischen Beizen entstehen oft Beizbeläge, die durch eine saure Nachbehandlung entfernt werden müssen. Eine Reinigung ohne Oberflächenabtrag bildet das Entfetten der Oberflächen durch Anwendung organischer Lösungsmittel oder wässriger oder alkalischer Reiniger.

Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.

Aluminiumoberflächen zeigen im metallisch blanken Zustand ein sehr hohes Reflexionsvermögen für Licht- und Wärmestrahlen. Je glatter die Oberfläche, desto höher ist die gerichtete Reflexion und desto glänzender wirkt die Oberfläche. Höchsten Glanz erzielt man auf Reinstaluminium und auf Speziallegierungen, wie beispielsweise AlMg oder AlMgSi.

Eine hoch reflektierende Oberfläche wird beispielsweise durch Polieren, Fräsen, durch Walzen mit hochglanzpolierten Walzen im letzten Walzgang oder durch chemisches oder elektrolytisches Glänzen erreicht. Das Polieren kann beispielsweise mit Schwabbelscheiben aus weichem Tuch und gegebenfalls unter Verwendung einer Polierpaste geschehen. Beim Polieren durch Walzen kann im letzten Walzgang beispielsweise mittels gravierter oder geätzter Stahlwalzen oder durch eine vorgegebene Struktur aufweisende und zwischen den Walzen und dem Walzgut angeordnete Mittel zusätzlich eine vorgegebene Oberflächenstruktur in die Aluminiumoberfläche eingeprägt werden. Das chemische Glänzen geschieht beispielsweise durch Anwendung eines hochkonzentrierten Säuregemisches bei üblicherweise hohen Temperaturen von ca. 100 °C. Für das elektrolytische Glänzen können saure oder alkalische Elek-trolyte eingesetzt werden, wobei üblicherweise saure Elektrolyte bevorzugt werden.

Um den Glanz zu bewahren, müssen die geglänzten Oberflächen vor chemischen und physikalischen Einflüssen geschützt bzw. konserviert werden. Die dazu aus dem Stand der Technik bekannten Verfahren, wie beispielsweise die GS-Anodisation, weisen die bereits oben beschriebenen verfahrensbedingten Nachteile wie hohe und schwer kontrollierbare Schichtdicken oder eine inhomogene Schichtbildung auf.

Das erfindungsgemässe Verfahren ergibt Reflektoren mit einem reflexionserhöhenden Schichtverbund, dessen auf einer Aluminiumschicht liegenden LI- und HI-Schichten eine homogene, gleichmässige und vordefinierte Schichtdicke aufweisen, welche zumindest im sichtbaren Bereich im wesentlichen transparent sind, so dass die Reflexion des Lichtes im wesentlichen an der Grenzfläche LI-Schicht/Aluminium erfolgen kann.

Für das erfindungsgemässe Anodisierverfahren wird die Aluminiumoberfläche mit einem vorbestimmten, definierten Oberflächenzustand versehen, worauf eine oxidierbare Deckschicht abgeschieden wird. Als Deckschichtmaterialien werden beispielsweise Alkali-, z.B. Li, Na, K, Erdalkali-, z.b. Mg, Ca, Sr, Ba, und/oder Übergangsmetallen, wie z.B. Sc, Ti, V, Cr, Mn, Fe, Co, Ni, Y, Zr, Nb, Mo, Te, Ru, Rh, Pd, Hf, Ta, W, Re, Os, Ir, Pt und/oder Lanthanoiden wie z.B. La, Ce, Pr, Nd, Pm, Dy, Yb oder Lu eingesetzt. Bevorzugt werden Ti, PrTi, LaTi, Ta, Hf, Nb, Zn, Ce oder eine Legierung der genannten Stoffe. Besonders bevorzugt ist die Verwendung von Ti, Ta, PrTi und LaTi. Das Aufbringen der Deckschichtmaterialien auf die Aluminiumschicht geschieht zweckmässigerweise mittels einem PVD- oder CVD-Prozess, oder elektrolytisch. Bevorzugt geschieht das Aufbringen des Deckschichtmaterials jedoch durch Sputtern oder Verdampfen, wie beispielsweise Elektronenstrahlverdampfen.

Die Schichtdicke der Deckschicht wird mittels einfachen Vorversuchen oder aus entsprechenden Tabellen unter Berücksichtigung der Volumenzunahme während der Oxidation des Deckschichtmaterials dahingehend bestimmt, dass die während dem nachfolgenden Anodisierprozess gebildete HI-Schicht der Massgabe $d_2 \cdot n_2 = I_2 \cdot \lambda/4 \pm 10$ nm genügt, wobei optische Schichtdicken der Hi-Schicht mit $I_2$ gleich 1 oder 3 bevorzugt werden.

Der Reflektorkörper wird anschliessend mit wenigstens dem die Deckschicht tragenden Teil in eine elektrisch leitende Flüssigkeit, den Elektrolyten, gegeben und als Anode an einer Gleichspannungsquelle angeschlossen, wobei als negative Elektrode üblicherweise rostfreier Stahl, Graphit, Blei oder Aluminium verwendet wird.

Erfindungsgemäss ist der Elektrolyt derart beschaffen, dass er das während dem Anodisierprozess gebildete Aluminiumoxid chemisch nicht auflöst, d.h. es findet keine Rücklösung des Aluminiumoxids statt. Im Gleichspannungsfeld entwickelt sich an der Kathode Wasserstoffgas und an der Anode Sauerstoffgas. Der an der Aluminiumoberfläche entstehende Sauerstoff bildet durch Reaktion mit dem Aluminium eine während dem Prozess zunehmend dickere Oxidschicht. Da der Schichtwiderstand mit zunehmender Dicke der Sperrschicht schnell ansteigt, nimmt der Stromfluss entsprechend schnell ab und das Schichtwachstum hört auf. Gleichzeitig wird auch das Metall der Deckschicht anodisch oxidiert. Die Prozessdauer der anodischen Oxidation dauert so lange, bis wenigstens alles Deckschichtmaterial vollständig oxidiert ist und die Aluminiumoxid-Sperrschicht die geforderte Schichtdicke erreicht hat.

Die elektrolytische Herstellung von LI- und HI-Schichten gemäss vorliegender Erfindung erlaubt die präzise Kontrolle der entsprechenden Schichtdicken. Die mit dem erfindungsgemässen Verfahren maximal erzielte Schichtdicke der Aluminiumoxid-Sperrschicht in Nanometer (nm) entspricht in erster Näherung der angelegten und in Volt (V) gemessenen Spannung, d.h. die maximal erzielte Schichtdicke steht in linearer Abhängigkeit zur Anodisierspannung, wobei der Spannungsabfall an der Deckschicht berücksichtigt werden muss. Der exakte Wert der maximal erreichten Schichtdicke in Abhängigkeit der angelegten Gleichspannung $U$ und unter Berücksichtigung des Spannungsabfalles an der Deckschicht kann durch einen einfachen Vorversuch bestimmt werden und liegt von 1.2 bis 1.6 nm/V, wobei der genaue Werte der Schichtdicke in Funktion der angelegten Spannung abhängig ist vom verwendeten Elektrolyten, d.h. dessen Zusammensetzung sowie dessen Temperatur.

Demnach beträgt die minimal angelegte Anodisierspannung $U_{min}$ in Volt:

$$d_1/1.6 \leq U_{min} \leq d_1/1.2$$

wobei $d_1$ die Schichtdicke in nm der LI-Schicht mit Brechungsindex $n_1$ bezeichnet, die der Massgabe

$$d_1 \cdot n_1 = I_1 \cdot \lambda/4 \pm 10 \text{ nm}$$

genügen muss.

Um dem sich zeitlich verändernden Spannungsabfall an der Deckschicht Rechnung zu tragen, kann die Anodisierspannung im Verlaufe des Anodisierprozesses kontinuierlich oder stufenweise erhöht werden. Die optimale Anodisierspannung bzw. der optimale zeitliche Anodisierspannungsverlauf sowie die Anodisierdauer kann entweder durch einfache Vorversuche oder durch eine während dem Anodisierprozess durchzuführende Reflexionsmessung bestimmt werden.

Die elektrolytische Oxidation kann in einem Arbeitsgang durch Anlegen einer vordefinierten Anodisierspannung oder durch kontinuierliches oder stufenweises Erhöhen der Anodisierspannung auf einen vorbestimmten Wert oder auf einen Wert, der durch Messung der optimalen Reflexionseigenschaften bestimmt wird, geschehen. Die elektrolytische Oxidation kann jedoch auch in mehreren Schritten, d.h. in mehreren Arbeitsgängen, beispielsweise mit unterschiedlichen Anodisierspannungen, geschehen.

Bevorzugt wird ein Verfahren, bei dem während der elektrolytischen Oxidation die Reflexionseigenschaften des Schichtverbundes kontinuierlich gemessen werden, und die Anodisierspannung $U$ in Volt, ausgehend von einem nach Massgabe

$$d_1/1.6 \leq U_A \leq d_1/1.2$$

gewählten Anfangswert $U_A$, kontinuierlich oder stufenweise erhöht wird, bis die gemessene Reflexion ein gewünschtes Maxima erreicht.

Durch die Verwendung eines nicht rücklösenden Elektrolyten sind die Aluminiumoxid-Sperrschichten nahezu porenfrei, d.h. allfällig auftretende Poren resultieren beispielsweise aus Verschmutzungen im Elektrolyten oder aus Gefüge-Fehlstellen in der Aluminium-Oberflächenschicht, jedoch nur unwesentlich durch Auflösung des Aluminiumoxids im Elektrolyten. Dasselbe gilt für die Deckschichtmaterialien, d.h. diese müssen sich im verwendeten Elektrolyten ebenfalls chemisch inert verhalten.

Als nicht rücklösende Elektrolyten können im erfindungsgemässen Verfahren beispielsweise organische oder anorganische Säuren, in der Regel verdünnt mit Wasser, mit einem pH-Wert von 2 und grösser, bevorzugt 3 und grösser, insbesondere 4 und grösser und 7 und kleiner, bevorzugt 6 und kleiner, insbesondere 5.5 und kleiner, verwendet werden. Bevorzugt werden kalt, d.h. bei Raumtemperatur, arbeitende Elektrolyten. Besonders bevorzugt werden anorganische oder organische Säuren, wie Schwefel- oder Phosphorsäure in niedriger Konzentration, Borsäure, Adipinsäure, Zitronensäure oder Weinsäure, oder Gemische davon, oder Lösungen von Ammonium- oder Natriumsalzen von organischen oder anorganischen Säuren, insbesondere der namentlich genannten Säuren und deren Gemische. Dabei weisen die Lösungen bevorzugt eine Konzentration von total 20 g/l oder weniger, zweckmässig 2 bis 15 g/l, von im Elektrolyten gelöstem Ammonium- oder Natriumsalz auf. Ganz besonders bevorzugt werden dabei Lösungen von Ammoniumsalzen der Zitronen- oder Weinsäure oder Natriumsalzen der Phosphorsäure.

Ein ganz besonders bevorzugter Elektrolyt enthält 1 bis 5 Gew.-% Weinsäure, welcher beispielsweise eine zur Einstellung des gewünschten pH-Wertes entsprechende Menge Ammoniumhydroxid ($NH_4OH$) beigegeben werden kann.

Die Elektrolyte sind in der Regel wässrige Lösungen.

Die maximal mögliche Anodisierspannung wird durch die Spannungsfestigkeit des Elektrolyten bestimmt. Diese ist beispielsweise von der Elektrolytzusammensetzung und von der Elektrolyttemperatur abhängig und liegt üblicherweise im Bereich zwischen 300 und 600 Volt.

Um beispielsweise die Spannungsfestigkeit des Elektrolyten zu erhöhen, kann dem Elektrolyten Alkohol als weiteres Lösungsmittel zugegeben werden. Dazu eignen sich insbesondere Methanol, Äthanol, Propanol wie beispielsweise Propylalkohol oder Isopropanol, oder Butanol. Die Menge des dem Elektrolyten zugegebenen Alkohols ist unkritisch, so dass das Mengenverhältnis Elektrolyt zu Lösungsmittel beispielsweise von bis zu 1:50 betragen kann. Durch die Zugabe von Alkohol kann die Spannungsfestigkeit des Elektrolyten bis beispielsweise 1200 V erhöht werden. Für das erfindungsgemässe Verfahren werden jedoch alkoholfreie Elektrolyten bevorzugt.

Die für das erfindungsgemässe Verfahren optimale Elektrolyttemperatur hängt vom verwendeten Elektrolyten ab; ist aber im allgemeinen für die Qualität der erhaltenen LI/HI-Schichten von untergeordneter Bedeutung. Für das erfindungsgemässe Verfahren werden Temperaturen von 15 bis 40 °C und insbesondere solche zwischen 18 und 30 °C bevorzugt.

Das erfindungsgemässe Verfahren eignet sich besonders für die kontinuierliche oder stückweise Herstellung eines reflexionserhöhenden Schichtverbundes auf Bänder, Bleche, Folien oder Stückgut aus Aluminium, sowie auf Verbundwerkstoffen mit mindestens einer Deckschicht aus Aluminium.

Besonders geeignet ist das erfindungsgemässe Verfahren für die kontinuierliche Herstellung von Reflektoren mit reflexionserhöhenden Schichtverbunden mittels beispielsweise einer Durchlaufanlage, beispielsweise einer Bandbeschichtungs- und Bandanodisieranlage.

Durch die im Vergleich zu einer GS-anodisierten Oxidschicht geringen Schichtdicke der als LI-Schicht wirkenden Aluminiumoxid-Sperrschicht, weist letztere nur wenige für die Lichtstreuung in der Schutzschicht verantwortliche Fremdpartikel, sprich Streuzentren, wie beispielsweise Partikel aus Fe, Si oder AlFeSi, auf. Zudem ist bei den erfindungsgemässen Reflektoren die linear von der Schichtdicke abhängige Absorption des einfallenden Lichtes gering. Ausserdem ist wegen der geringen Schichtdicke der LI- und HI-Schichten die Lichtstreuung an Biegekanten, insbesondere diejenige, die aus Rissen in den Schichten des Schichtverbundes resultiert, üblicherweise vernachlässigbar gering.

Währenddem bei GS-Schichten üblicherweise wegen der bei grossen Schichtdicken auftretenden Schichtdickenvariation selektive Lichtabsorption eintritt und dadurch Irisierungsprobleme schafft, entsteht durch die geringe und über die Reflektoroberfläche sehr konstante Schichtdicken der LI- und HI-Schichten keine Irisierung (Regenbogenfarben). Zudem sind -- durch die Schichtdicken der LI-/HI-Schichten bedingt -- die Abstände der zu Irisierungserscheinungen führenden Reflexionsebenen zu gering.

**Patentansprüche**

1. Verfahren zur Herstellung eines Reflektors enthaltend einen reflexionserhöhenden Schichtverbund als reflektierende Oberflächenschicht auf einem Reflektorkörper, wobei der Schichtverbund eine Sandwichkonstruktion mit einer gegen den Reflektorkörper gerichteten Aluminiumschicht, einer gegen die zu reflektierende Strahlung gerichteten äusseren Schicht, der HI-Schicht, mit einem Brechungsindex $n_2$ und einer dazwischenliegenden Aluminiumoxidschicht, der LI-Schicht, mit einem gegenüber $n_2$ kleineren Brechungsindex $n_1$ darstellt,
   **dadurch gekennzeichnet, dass**

   a) auf die Aluminiumschicht des Schichtverbundes ein Alkali-, Erdalkali- oder Übergangsmetall, oder ein Lanthanid, oder eine Legierung dieser Stoffe als oxidierbares Deckschichtmaterial abgeschieden wird, wobei die Schichtdicke der gebildeten Deckschicht derart gewählt wird, dass nach einer vollständigen Oxidation des Deckschichtmaterials eine HI-Schicht mit Schichtdicke $d_2$ nach Massgabe

$$d_2 \cdot n_2 = l_2 \cdot \lambda/4 \pm 10\ nm$$

gebildet wird, wobei $d_2$ die Dicke der HI-Schicht in nm, $n_2$ der Brechungsindex der HI-Schicht, $\lambda$ die mittlere Wellenlänge in nm des auf die Reflektoroberfläche eingestrahlten Lichtes und $l_2$ eine ungerade natürliche Zahl bezeichnen, und

b) der Reflektorkörper mit wenigstens dem die Deckschicht tragenden Teil der Aluminiumschicht in einen Aluminiumoxid nicht rücklösenden Elektrolyten gegeben und als Anode geschaltet solange elektrolytisch oxidiert wird, bis das gesamte Deckschichtmaterial vollständig zu einer HI-Schicht oxidiert ist und sich aus der Aluminiumschicht eine transparente und porenfreie LI-Aluminiumoxid-Sperrschicht mit einer Dielektrizitätskonstanten $\varepsilon_1$ bei 20 °C von 6 bis 10.5 gebildet hat, deren Schichtdicke der Massgabe

$$d_1 \cdot n_1 = l_1 \cdot \lambda/4 \pm 10\ nm$$

genügt, wobei $d_1$ die Schichtdicke in nm der LI-Schicht mit Brechungsindex $n_1$ bezeichnet und $l_1$ eine ungerade natürliche Zahl ist.

2. Verfahren nach Anspruch 1, **dadurch gekennzeichnet, dass** das Deckschichtmaterial durch ein PVD-Verfahren (physical vapour deposition) aufgebracht wird.

3. Verfahren nach einem der Ansprüche 1 oder 2, **dadurch gekennzeichnet, dass** als Deckschichtmaterial Ti, PrTi, LaTi, Ta, Hf, Nb, Zn oder Ce verwendet wird.

4. Verfahren nach einem der Ansprüche 1 bis 3, **dadurch gekennzeichnet, dass** während der elektrolytischen Oxidation die Reflexionseigenschaften des Schichtverbundes kontinuierlich gemessen werden, und die Anodisierspannung $U$ in Volt, ausgehend von einem nach Massgabe

$$d_1/1.6 \leq U_A \leq d_1/1.2$$

gewählten Anfangswert $U_A$, kontinuierlich oder stufenweise erhöht wird, bis die gemessene Reflexion ein gewünschtes Maxima erreicht.

5. Verfahren nach einem der Ansprüch 1 bis 4, **dadurch gekennzeichnet, dass** die Herstellung des reflexionserhöhenden Schichtverbundes kontinuierlich mittels einem Bandverfahren geschieht.

## Claims

1. Process for the production of a reflector containing a reflection-increasing laminated composite serving as a reflecting surface layer on a reflector body, in which the laminated composite is a sandwich construction having an aluminium layer directed towards the reflector body, an outer layer with a refractive index $n_2$ directed towards the radiation to be reflected, i.e. the HI layer, and an intermediate aluminium oxide layer with a refractive index $n_1$ lower than $n_2$, i.e. the LI layer,
**characterised in that**

a) an alkali metal, alkaline earth metal or transition metal or a lanthanide or an alloy of these substances is deposited on the aluminium layer of the laminated composite as an oxidisable outer layer material, the thickness of the outer layer formed being selected in such a manner that, after complete oxidation of the outer layer material, an HI layer having a thickness $d_2$ is formed according to

$$d_2 \cdot n_2 = l_2 \cdot \lambda/4 \pm 10\ nm,$$

where $d_2$ is the thickness of the HI layer in nm, $n_2$ is the refractive index of the HI layer, $\lambda$ is the mean wavelength of the light incident on the reflector surface in nm and $l_2$ is an odd natural number, and

b) the reflector body is placed via at least the part of the aluminium layer bearing the outer layer in an electrolyte not re-dissolving aluminium oxide and is connected as an anode and electrolytically oxidised until the entire outer layer material has oxidised completely to an HI layer and a transparent, pore-free U aluminium oxide barrier layer having a dielectric constant $\varepsilon_1$ of 6 to 10.5 at 20°C has formed from the aluminium layer, the thickness of which satisfies

$$d_1 \cdot n_1 = l_1 \cdot \lambda/4 \pm 10\ nm,$$

where $d_1$ is the thickness of the LI layer with a refractive index $n_1$ in nm and $l_1$ is an odd natural number.

**2.** Process according to claim 1, **characterised in that** the outer layer material is applied by means of a PVD (physical vapour deposition) process.

**3.** Process according to either of claims 1 or 2, **characterised in that** Ti, PrTi, LaTi, Ta, Hf, Nb, Zn or Ce is used as the outer layer material.

**4.** Process according to one of claims 1 to 3, **characterised in that** the reflective properties of the laminated composite are measured continuously during the electrolytic oxidation and the anodising voltage U in volts, departing from an initial value $U_A$ selected according to

$$d_1/1.6 \leq U_A \leq d_1/1.2,$$

is increased continuously or gradually until the reflection measured has reached a desired maximum value.

**5.** Process according to one of claims 1 to 4, **characterised in that** the reflection-increasing laminated composite is produced continuously by means of a strip-type process.


**Revendications**

**1.** Procédé de fabrication d'un réflecteur contenant une couche composite augmentant la réflexion comme couche de surface réfléchissante sur un corps de réflecteur, la couche composite étant une construction en sandwich avec une couche d'aluminium du côté du corps de réflecteur, une couche extérieure du côté du rayonnement à réfléchir, la couche HI, d'un indice de réfraction $n_2$ et une couche intermédiaire d'oxyde d'aluminium, la couche LI, d'un indice de réfraction $n_1$ plus petit que $n_2$,
    **caractérisé en ce que**
    sur la couche d'aluminium de la couche composite un métal alcalin, un métal alcalino-terreux ou un métal de transition ou un lanthanide, ou un alliage de ces substances est déposé comme matériau de couche de couverture oxydable, l'épaisseur de couche de la couche de couverture formée étant sélectionnée de telle façon qu'après oxydation complète du matériau de la couche de couverture on forme une couche HI d'épaisseur de couche $d_2$ telle que

$$d_2 \cdot n_2 = l_2 \cdot \lambda/4 \pm 10 \text{ nm},$$

$d_2$ étant l'épaisseur de la couche HI en nm, $n_2$ l'indice de réfraction de la couche HI, $\lambda$ la longueur d'onde moyenne en nm de la lumière irradiant la surface du réflecteur et $l_2$ un nombre naturel impair, et
    le corps de réflecteur est oxydé par voie électrolytique, avec au moins la partie de la couche d'aluminium portant la couche de couverture plongée dans un électrolyte ne provoquant pas la redissolution de. l'oxyde d'aluminium et branchée comme anode, jusqu'à ce que l'ensemble du matériau de la couche de couverture soit entièrement oxydé en une couche HI et qu'une couche de barrage LI d'oxyde d'aluminium transparente et sans pores présentant une constante diélectrique $\varepsilon_1$ à 20 °C de 6 à 10,5 se soit formée à partir de la couche d'aluminium, dont l'épaisseur de couche respecte la formule

$$d_1 \cdot n_1 = l_1 \cdot \lambda/4 \pm 10 \text{ nm},$$

$d_1$ étant l'épaisseur de couche en nm de la couche LI d'indice de réfraction $n_1$ et $l_1$ un nombre naturel impair.

**2.** Procédé suivant la revendication 1, **caractérisé en ce que** le matériau de la couche de couverture est appliqué par un procédé PVD (physical vapour déposition).

**3.** Procédé suivant l'une des revendications 1 ou 2, **caractérisé en ce qu'**on utilise comme matériau de couche de couverture Ti, PrTi, LaTi, Ta, Hf, Nb, Zn ou Ce.

**4.** Procédé suivant l'une des revendications 1 à 3, **caractérisé en ce que** les caractéristiques de réflexion de la couche composite sont mesurées en continu pendant l'oxydation électrolytique et la tension d'anodisation U en volts est augmentée en continu ou par paliers en partant d'une valeur de départ $U_A$ sélectionnée selon

$$d_1/1,6 \leq U_A \leq d_1/1,2$$

jusqu'à ce que la réflexion mesurée atteigne un maximum désiré.

**5.** Procédé suivant l'une des revendications 1 à 4, **caractérisé en ce que** la fabrication de la couche composite augmentant la réflexion se fait en continu à l'aide d'un procédé d'enduction de bandes.